# EUROPEAN PATENT APPLICATION

(11) **EP 2 860 680 A1**
(43) Date of publication of application: **15.04.2015**
(21) Application number: 12878903.9
(22) Date of filing: 11.06.2012
(51) Int. Cl.: G06Q 20/08

(54) **METHOD AND APPARATUS FOR GENERATING DYNAMIC AUTHORIZATION CODE, AND PAYMENT TRANSACTION METHOD AND SYSTEM**

(71) Applicant: Sun, Hongming, Fengtai, Beijing 100073 (CN)
(72) Inventor: Sun, Hongming, Fengtai, Beijing 100073 (CN)
(74) Representative: Tappe, Udo
(86) International application number: PCT/CN2012/076719
(87) International publication number: WO 2013/185278

(57) **Abstract**

A method and apparatus for generating a dynamic authorization code, and a payment transaction method and system. The method for generating a dynamic authorization code comprises: creating at least one payment card account, each payment card account being corresponding to a piece of payment card information; generating a dynamic authorization code, and establishing and saving a correspondence between the dynamic authorization code and the payment card account; and sending the dynamic authorization code to a user terminal for saving. Through technical solutions provided in embodiments of the present invention, a dynamic authorization code is generated, and a correspondence among the dynamic authorization code, a payment card account and payment card information is established. When a payment transaction is performed, a user can trigger a server to complete the payment transaction as long as the user provides the dynamic authorization code, and the dynamic authorization code can be updated or terminated at any time, so as to effectively improve security of the user data and the payment transaction.

## Description

### FIELD

The disclosure generally relates to the field of computer technology, and in particular to a method and an apparatus for generating a dynamic authorization code, a payment transaction method and a payment transaction system.

### BACKGROUND

With a growing popularity and application of payment cards (such as bank cards, credit cards, etc.) in daily life, the problem of the security of the card, especially the problem of the payment security of the payment card, becomes increasingly prominent.

In the conventional art, different technical solutions are used to improve the payment security of the payment card. For example, a user may apply a temporary credit card with a shorter expiration date from a credit card company. For example, a technology solution described as follows in which a payment transaction is confirmed by using a mobile phone is used in the conventional art.

Firstly, payment card information (such as a card number, a password), a phone number and a confirmation code of the user are saved in a server of a bank. Secondly, the user inserts the payment card to a transaction terminal and inputs the password when the user performs payment for an amount, the transaction terminal sends a transaction request, including the card number, the password and transaction content, to the server of the bank. Thirdly, the server of the bank determines whether the card number and the password are correct based on saved information, and the bank server acquires the phone number of the user and sends the transaction content to the phone of the user in form of a short message in the case that the bank server determines that the card number and the password are correct. Subsequently, after the user receives confirmation information sent by the bank server, the user communicates with the bank server again and sends the confirmation code to the bank server in form of the short message if the user determines that the transaction content sent by the bank server is the transaction that the user himself wants to complete. Finally, the bank server determines whether the confirmation code sent by the user is correct based on the saved confirmation code, the bank server performs the transaction and completes the payment in the case that the confirmation code is correct, or the bank server terminates the transaction to ensure the payment security in the case that the confirmation code is not correct.

According to the above technology solution, the user has to provide information of the card number and the password of the user's payment card to businesses, it is very likely to cause loss and leakage of user information, thereby reducing the payment security. Although the payment security of bank card is improved by using a confirmation code verification process, the phone number, the card number of the payment card and the confirmation code are in a bound style, and the card number, the phone number and the confirmation code are static fixed codes, the confirmation code used by the user when the user confirms the transaction by the phone every time is a fixed confirmation code. There is a high possibility that the confirmation code is cracked and stolen, thus the effect of improving the payment security of the payment card according to the technology solution is greatly reduced. In addition, in order to ensure that the user can send the confirmation code to the bank server, the phone has to be always in a network connected state. According to the above technology solution, the payment can not be performed in the case that the communication signal is bad or the phone is in arrearage, thereby resulting in inconvenience to the user.

### SUMMARY

In view of this, it is provided a method and an apparatus for generating a dynamic authorization code, a payment transaction method and a payment transaction system according to the embodiments of the invention. According to the above technology solutions, payment security may be effectively improved when a payment transaction is performed.

The embodiments of the invention are implemented by the following technical solutions.

A method for generating a dynamic authorization code, includes:
creating at least one payment card account, where each payment card account is corresponding to information of a payment card;
generating a dynamic authorization code, establishing and saving a correspondence between the dynamic authorization code and the payment card account; and sending the dynamic authorization code to a user terminal for saving.

A payment transaction method, where a dynamic authorization code is generated previously by using the above method for generating a dynamic authorization code, the payment transaction method includes:
receiving, by a server, the dynamic authorization code saved by the user terminal and forwarded by a third party device;
searching for the payment card account corresponding to the dynamic authorization code; and
completing a payment transaction by using the payment card information corresponding to the payment card account.

An apparatus for generating a dynamic authorization code, including:
an account creating unit, configured to create at least one payment card account, where each payment card account is corresponding to information of a payment card;
an authorization code generating unit, configured to generate a dynamic authorization code, establish and save a correspondence between the dynamic authorization code and the payment card account; and
a sending unit, configured to send the dynamic authorization code to a user terminal for saving.

A payment transaction system, including a server, a user terminal and a third party device, where
the server is configured to generate a dynamic authorization code and send the dynamic authorization code to the user terminal for saving;
the third party device is configured to forward the dynamic authorization code saved by the user terminal to the server; and
the server is further configured to search for a payment card account corresponding to the dynamic authorization code, and complete a payment transaction by using the payment card information corresponding to the payment card account.

In the above technical solutions according to the embodiments of the invention, a dynamic authorization code is generated, and correspondences among the dynamic authorization code, a payment card account and payment card information is established. When a payment transaction is performed, a user may trigger a server to complete the payment transaction as long as the user provides the dynamic authorization code, and the dynamic authorization code can be updated at any time, so as to effectively improve the security of the user data and the payment transaction.

### BRIEF DESCRIPTION OF THE DRAWINGS

The drawings are to provide a further understanding of the invention, and constitute a part of the specification. The drawings are used to explain the invention together with the embodiments of the invention, and are not to limit the invention. In the drawings:
Figure 1 is a flowchart of a first embodiment of a method for generating a dynamic authorization code according to an embodiment of the invention;
Figure 2 is a flowchart of a second embodiment of a method for generating a dynamic authorization code according to an embodiment of the invention;
Figure 3 is a flowchart of a third embodiment of a method for generating a dynamic authorization code according to an embodiment of the invention;
Figure 4 is a flowchart of a fourth embodiment of a method for generating a dynamic authorization code according to an embodiment of the invention;
Figure 5 is a flowchart of a payment transaction method according to an embodiment of the invention;
Figure 6 is a schematic diagram of a first embodiment of an apparatus for generating a dynamic authorization code according to an embodiment of the invention;
Figure 7 is a schematic diagram of a second embodiment of an apparatus for generating a dynamic authorization code according to an embodiment of the invention;
Figure 8 is a schematic diagram of a third embodiment of an apparatus for generating a dynamic authorization code according to an embodiment of the invention;
Figure 9 is a schematic diagram of a fourth embodiment of an apparatus for generating a dynamic authorization code according to an embodiment of the invention; and
Figure 10 is a schematic diagram of a payment transaction system according to an embodiment of the invention.

### DETAILED DESCRIPTION

To provide technology solutions in which payment security may be improved when a payment transaction is performed. a method and an apparatus for generating a dynamic authorization code, a payment transaction method and a payment transaction system according to the embodiments of the invention are provided. The preferred embodiments of the invention are described hereinafter in conjunction with drawings. It should be understood that the preferred embodiments of the invention described hereinafter are intended only to illustrate and explain rather than to limit the invention. The embodiments of the invention and the features according to the embodiments may be combined if they do not conflict.

### A First Embodiment

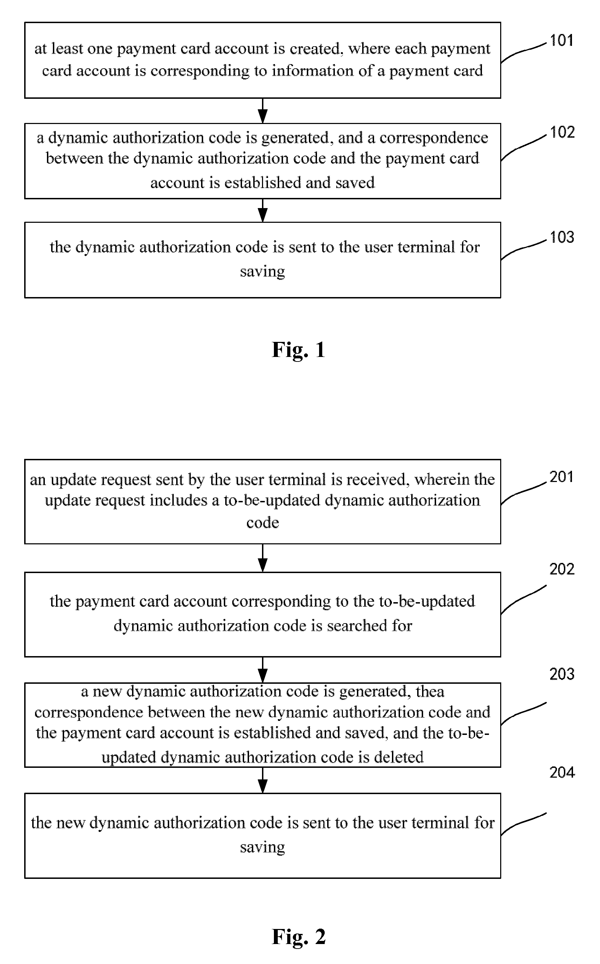

Reference is made to Figure 1, which is a flowchart of a first embodiment of a method for generating a dynamic authorization code according to an embodiment of the invention. The method includes step 101 to step 103.

In step 101, at least one payment card account is created, where each payment card account is corresponding to information of a payment card.

In present payment transaction process, no matter in the solution in which only whether a card number and a password of the payment card being correct is verified or in the solution in which other information is further verified after it is verified that the card number and the password are correct ( such as the solution in which a confirmation code is verified mentioned in the background), information of the card number and the password of the user's payment card are needed to provide to businesses by the user. In the above payment solutions, it is very likely to cause leakage of the card number and the password, thereby causing important privacy data of the user to be in a state in which the security is very low. In view of this, the object of the embodiments of the invention is to provide a solution in which the user does not provide the privacy data such as the card number to the businesses to complete the payment transaction, thereby protecting the security of user data. Moreover, it is taken into account that a static fixed code is possible to be stolen and that thus the payment security is not high, it is provided a payment transaction method based on a dynamic authorization code according to the embodiments of the invention.

As can be seen from the above description, the generation of the dynamic authorization code is a basis to implement the payment transaction method with the high payment security according to the invention.

In step 101, the user creates a card account of the payment card held by the user in a server. For example, the user A holds three payment cards A₁, A₂ and A₃, in the case that the user A performs payment transactions of the payment card A₁ and the payment card A₂ by using the solution according to the invention, the user firstly requests the server to create for the user a payment card account B₁ corresponding to the payment card A1 and a payment card account B₂ corresponding to the payment card A₂. Each payment card account saves payment card information corresponding to the payment card account, such as a cardholder name, a card number, and an expiration date.

It should be noted that each of the payment card accounts only corresponds to one payment card. The payment card account may be represented by the card number, a bank name or other predefined information of the payment card corresponding to the payment card account, which is not limited herein.

In step 102, a dynamic authorization code is generated, and a correspondence between the dynamic authorization code and the payment card account is established and saved.

The dynamic authorization code may be a set of random numbers, and may also be a code including letters, numbers or other symbols. The server may timely generate the dynamic authorization code based on a trigger of a user terminal, and may also timely generate the dynamic authorization code based on the set of the system.

It should be noted that one dynamic authorization code only corresponds to one payment card account, but one payment card account may correspond to multiple dynamic authorization codes. For example, the dynamic authorization codes corresponding to the payment card account B₁ created by the user A may be dynamic authorization codes C₁, C₂, and C₃. The dynamic authorization code corresponding to the payment card account B₂ may be a dynamic authorization code D₁. In addition, in order to ensure normal performing of payment transaction, the server is not allowed to generate same dynamic authorization codes. That is, the dynamic authorization code corresponding to the payment card account B₁ is not allowed to be the dynamic authorization code D₁. Of course, the dynamic authorization codes corresponding to the payment card account B₂ are not allowed to be the dynamic authorization codes C₁, C₂, or C₃, otherwise an error may occur when the payment card account that corresponds to the dynamic authorization code is determined.

In step 103, the dynamic authorization code is sent to the user terminal for saving.

After step 101, the server saves the correspondence between the payment card account and the payment card information. After step 102, the server saves the correspondence between the payment card account and the dynamic authorization code. It may be seen that the payment card account, the payment card information and the dynamic authorization code correspond to each other. The user terminal may trigger the server to complete the payment transaction as long as the user terminal knows one of the payment card account, the payment card information and the dynamic authorization code. However, taking into account the variability of the dynamic authorization code, according to the embodiment of the invention, the dynamic authorization code is sent to the user terminal to make the user terminal trigger the server to complete the payment transaction by using the dynamic authorization code as needed.

### A Second Embodiment

Reference is made to Figure 2, which is a flowchart of a second embodiment of a method for generating a dynamic authorization code according to an embodiment of the invention. After the server sends the dynamic authorization code to the user terminal, the method for generating a dynamic authorization code may further include step 201 to step 204.

In step 201, an update request sent by the user terminal is received, where the update request includes a to-be-updated dynamic authorization code.

An authorization code update process may be started after a certain dynamic authorization code is used by the user for a period of time or in the case that the user thinks that the current dynamic authorization code is unsafe (that is, the current dynamic authorization code may be stolen). The user sends the update request including the to-be-updated dynamic authorization code to the server to make the server update the dynamic authorization code.

It should be noted that the user may update only one dynamic authorization code at one time, for example, in the case that the user updates only the dynamic authorization code C₁ corresponding to the payment card account B₁, the dynamic authorization code included in the update request is the dynamic authorization code C₁. The user may also update multiple dynamic authorization codes at one time, for example, in the case that the user updates the dynamic authorization codes C₁ and C₃ corresponding to the payment card account B₁, correspondingly, the dynamic authorization codes included in the update request are the dynamic authorization codes C₁ and C₃. In the case that the user wants to update both the dynamic authorization code C₂ corresponding to the payment card account B₁ and the dynamic authorization code D₁ corresponding to the payment card account B₂, the dynamic authorization codes included in the update request are the dynamic authorization codes C₂ and D₁.

In step 202, the payment card account corresponding to the to-be-updated dynamic authorization code is searched for.

Step 202 is mainly to prepare for the later establishment of a correspondence between a new dynamic authorization code and the payment card account. The servers determines that to which payment card account a updated new dynamic authorization code corresponds and with which payment card account a correspondence should be established only in the case that the payment card account corresponding to the to-be-updated dynamic authorization code is found.

For example, in the case that the dynamic authorization code included in the update request is the dynamic authorization code C₁, the payment card account found in step 202 is the payment card account B₁.

In step 203, a new dynamic authorization code is generated, a correspondence between the new dynamic authorization code and the payment card account is established and saved, and the to-be-updated dynamic authorization code is deleted.

The server generates the new dynamic authorization code (which is not allowed to be the same as the present dynamic authorization code) based on a trigger of the update request of the user terminal. The server establishes the correspondence between the new dynamic authorization code and the payment card account found in step 202, and deletes the to-be-updated dynamic authorization code. That is, the original dynamic authorization code is replaced with the new dynamic authorization code, the original dynamic authorization code is voided. In this way, the server may accurately find the payment card account corresponding to the new dynamic authorization code when the user terminal triggers the server by the new dynamic authorization code to perform the payment transaction for the next time, the server may no longer be triggered by the original dynamic authorization code.

For example, in the case that the new dynamic authorization code generated by the server is the dynamic authorization code C₄, after the correspondence between the dynamic authorization code C₄ and the payment card account B₁ is established and the dynamic authorization code C₁ is deleted, the dynamic authorization code corresponding to the payment card account B₁ is the dynamic authorization codes C₂, C₃ and C₄.

It should be noted that, in practice, the server may firstly generate the new dynamic authorization code, secondly searches for the payment card account corresponding to the to-be-updated dynamic authorization code, thirdly establishes the correspondence between the new dynamic authorization code and the payment card account, and then delete the to-be-updated dynamic authorization code.

In addition, the server may automatically update the dynamic authorization code based on the request of the user. For example, the user may request the server to automatically update the dynamic authorization code after each successful payment.

In step 204, the new dynamic authorization code is sent to the user terminal for saving.

In order to ensure that the user terminal is synchronized with the server, the server sends the generated new dynamic authorization code to the user terminal, the user terminal uses the new dynamic authorization code when the payment transaction is performed for the next time.

### A Third Embodiment

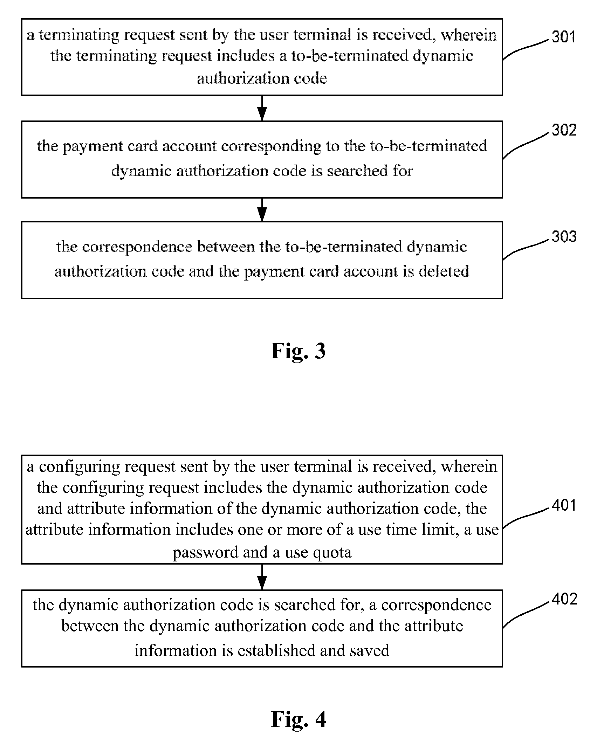

Reference is made to Figure 3, which is a flowchart of a third embodiment of a method for generating a dynamic authorization code according to an embodiment of the invention. After the server sends the dynamic authorization code to the user terminal, the method for generating a dynamic authorization code may further include step 301 to step 303.

In step 301, a terminating request sent by the user terminal is received, where the terminating request includes a to-be-terminated dynamic authorization code.

Besides updating the dynamic authorization code corresponding to the payment card account, the user may also terminate the use of a certain dynamic authorization code or certain dynamic authorization codes. In this case, the user terminal starts a terminating process for an authorization code, sends a terminating request including the to-be-terminated dynamic authorization code to the server to make the server terminate the dynamic authorization code.

Similarly to the update request, the user terminal may terminate only one dynamic authorization code at one time, and may also terminate multiple dynamic authorization codes at one time. For example, in the case that the user terminates only the dynamic authorization code C₁ corresponding to the payment card account B₁, the dynamic authorization code included in the terminating request is the dynamic authorization code C₁. In the case that the user terminates the dynamic authorization code C₂ corresponding to the payment card account B₁ and the dynamic authorization code D₁ corresponding to the payment card account B₂, the dynamic authorization codes included in the terminating request are the dynamic authorization codes C₂ and D₁.

In step 302, the payment card account corresponding to the to-be-terminated dynamic authorization code is searched for.

The called terminating the dynamic authorization code may be understood as deleting physically or logically the correspondence between the to-be-terminated dynamic authorization code and the payment card account. The server searches for the payment card account corresponding to the to-be-terminated dynamic authorization code, that is, the server determines that to which payment card account the to-be-terminated dynamic authorization code corresponds and, and the correspondence between which payment card account and the dynamic authorization code is to be deleted.

For example, in the case that the to-be-terminated dynamic authorization codes included in the terminating request is the dynamic authorization code C₂ and the dynamic authorization code D₁, the payment card accounts found in step 302 are the payment card account B₁ corresponding to the dynamic authorization code C₂ and the payment card account B₂ corresponding to the dynamic authorization code D₁.

In step 303, the correspondence between the to-be-terminated dynamic authorization code and the payment card account is deleted.

After the payment card account corresponding to the to-be-terminated dynamic authorization code is found in step 302, the correspondence between the to-be-terminated dynamic authorization code and the payment card account is deleted, the use of the dynamic authorization code is terminated.

### A Fourth Embodiment

Reference is made to Figure 4, which is a flowchart of a fourth embodiment of a method for generating a dynamic authorization code according to an embodiment of the invention. After the server sends the dynamic authorization code to the user terminal, the method for generating a dynamic authorization code may further include step 401 and step 402.

In step 401, a configuring request sent by the user terminal is received, where the configuring request includes the dynamic authorization code and attribute information of the dynamic authorization code, the attribute information includes one or more of a use time limit, a use password and a use quota.

In step 402, the dynamic authorization code is searched for, a correspondence between the dynamic authorization code and the attribute information is established and saved.

According to the embodiment, besides the correspondence among the payment card account, the payment card information and the dynamic authorization code being established, the attribute information of the dynamic authorization code is further configured, the correspondence between the dynamic authorization code and the attribute information is established. In this way, the user may use the dynamic authorization code corresponding to the attribute information based on the attribute information defined by the user.

In the case that the attribute information is the use time limit, valid time of the dynamic authorization code is limited. Referring to Table 1, the use time limit of the dynamic authorization code may be limited by a maximum transaction times. The maximum transaction times for the dynamic authorization code C₁ is 1, that is, the dynamic authorization code C₁ is invalid after the user triggers the server to perform the payment transaction by using the dynamic authorization code C₁ for one time. The maximum transaction times for the dynamic authorization code D₁ is 5, that is, the dynamic authorization code D₁ is invalid after the user triggers the server to perform the payment transaction by using the dynamic authorization code D₁ for five times. The user may update or terminate the invalid dynamic authorization code. The user may also request the server to update or terminate a certain valid dynamic authorization code or certain valid dynamic authorization codes as needed at any time.

In addition, the use time limit of the dynamic authorization code may further be limited by a period of time. For example, in the case that the use time limit is 5 days, the dynamic authorization code is valid during the 5 days no matter whether the server is triggered during the 5 days.

In the case that the attribute information is the use quota, a maximum transactions amount for the payment transactions using the dynamic authorization code is limited. Referring to Table 1, the maximum transactions amount for the dynamic authorization code C₁ is $300, that is, only transactions amount below $300 is allowed when the user triggers the server to perform the payment transaction by using the dynamic authorization code C₁. The maximum transactions amount for the dynamic authorization code D₁ is $100, that is, only transactions amount below $100 is allowed when the user triggers the server to perform the payment transaction by using the dynamic authorization code D₁.

In the case that the attribute information is the use password, the use password has to be sent to the server and the server verifies whether the use password is correct when the user triggers the server to perform the payment transaction by using the dynamic authorization code, thereby further improving the security of the payment transaction according to the embodiments of the invention. Referring to Table 1, there is a use password for the dynamic authorization code C₁, the correct use password 1234 has to be input to trigger the server to perform the payment transaction when the user triggers the server by using the dynamic authorization code C₁. There is no use password for the dynamic authorization code D₁, the user may trigger the server to perform the payment transaction only by using the dynamic authorization code D₁.

**Table 1**

| payment card account | dynamic authorization code | use time limit | use quota | use password |
|---|---|---|---|---|
| B₁ | C₁ | maximum transaction times 1 | maximum transactions amount $300 | 1234 |
| B₂ | D₁ | maximum transaction times 5 | maximum transactions amount $100 | there is no use password for D₁ |

### A Fifth Embodiment

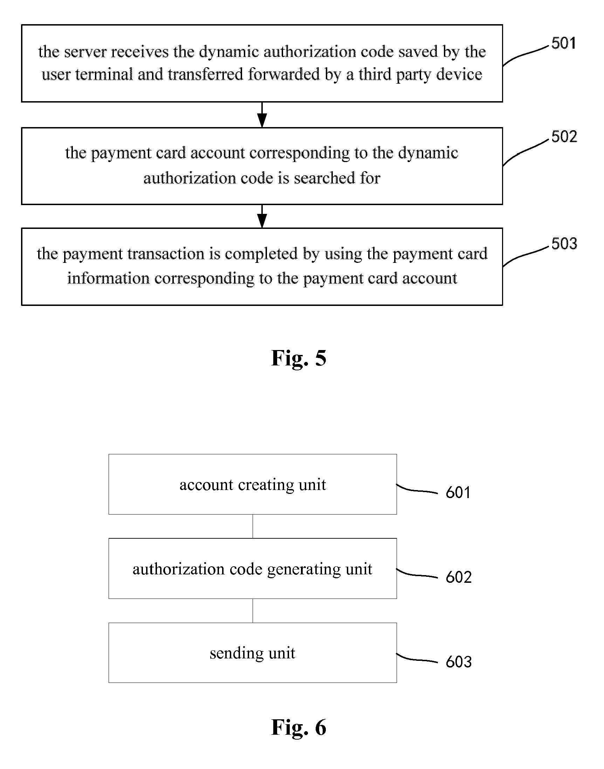

Reference is made to Figure 5, which is a flowchart of a payment transaction method according to an embodiment of the invention. After the server generates the dynamic authorization code and establishes the correspondence among the payment card account, the payment card information and the dynamic authorization code, the payment transaction may be performed by using the payment transaction method according to the embodiment. The payment transaction method includes step 501 to step 503.

In step 501, the server receives the dynamic authorization code saved by the user terminal and forwarded by a third party device.

In the payment transaction method according to the embodiment of the invention, the user does not have to provide the privacy data (such as the card number, etc.) of the payment card held by the user to the businesses, the user only sends the dynamic authorization code corresponding to the payment card to the server via the third party device. In this way, the important privacy data of the user is protected effectively from being stolen, thereby ensuring the security of the privacy data and the payment transactions.

The case that the user A holds three payment cards A₁, A₂, A₃ is taken as an example. It's provided that the server saves the payment card accounts corresponding to the payment card A₁ and the payment card A₂, and the server does not save the payment card account corresponding to the payment card A₃. In the case that the user intends to pay the amount of the transaction by using the payment card A₃, the user has to provide the information of the card number and the password of the payment card A₃, the payment transaction is completed after the card number and the password are verified to be correct. In the case that the user A intends to pay the amount of the transaction by using the payment card A₁, the user A only provides the dynamic authorization code corresponding to the payment card A₁ to the businesses. There are three dynamic authorization codes C₁, C₂ and C₃ corresponding to the payment card A₁, in the case that the user A intends to perform the payment transaction by using the payment card A₁, the user A further determines which dynamic authorization code is selected to trigger the server. For example, the user A selects the dynamic authorization code C₂.

For how the third party device forwarding the dynamic authorization code saved by the user terminal to the server, detailed description is not given herein.

In step 502, the payment card account corresponding to the dynamic authorization code is searched for.

After the server receives the dynamic authorization code forwarded by the third party device, the server is triggered to start a payment transaction process. The server firstly searches for the payment card account corresponding to the dynamic authorization code sent by the user terminal, that is, the server determines which payment card is used to the current payment transaction. In addition, in the 502, it is verified that whether the dynamic authorization code is correct. If the dynamic authorization code is not correct, the payment card account corresponding to the dynamic authorization code can not be found.

For example, the server searches for all the payment card accounts created by the user(as in the above example, the user creates two payment card accounts B1 and B2 in the server) to determine to which payment card account the dynamic authorization code C₂ corresponds after the server receives the dynamic authorization code C₂. The server determines that the dynamic authorization code C₂ corresponds to the payment card account B₁.

In step 503, the payment transaction is completed by using the payment card information corresponding to the payment card account.

After the payment card account corresponding to the dynamic authorization code is determined in step 502, the payment card information corresponding to the payment card account may be obtained, and the payment transaction is completed by using the obtained payment card information.

For example, in the case that it is determined that the dynamic authorization code C₂ corresponds to the payment card account B₁ in step 502, the payment card information corresponding to the payment card account B₁ is searched for in step 503. The server may determine that the user intends to pay the amount of the current transaction by using the payment card A₁ according to the card number in the payment card information.

It should be noted that, after the payment card information is found, the server may further obtain the attribute information of the dynamic authorization code. In the case that the attribute information is the use quota, the server further determines whether the amount of the current transaction exceeds the use quota. In the case that the amount of the current transaction exceeds the use quota, the current payment transaction is not able to be completed, and the server may send a prompt message to the user terminal.

The implementation of the third party device forwarding the dynamic authorization code saved by the user terminal in step 501 is described briefly as follows.

In one implementation, the user terminal sends the saved dynamic authorization code to a card reader in a contacted communication manner or a contactless communication manner, and then the card reader forwards the dynamic authorization code to the server, in the case that the third party device is the card reader.

For example, communication is established between the user terminal and the card reader provided by the businesses when the user shops and a payment transaction is formed. The dynamic authorization code selected by the user is sent to the card reader through a barcode reading or Near Field Communication (NFC) (alternatively, the card reader may initiatively read the dynamic authorization code selected by the user from the user terminal), the card reader forwards the dynamic authorization code to the server. The dynamic authorization code is transmitted to the user terminal and saved by the user terminal before the user shops and the payment transaction is formed, the user terminal does not need to be in a network connected state when the payment transaction is performed, thereby a great convenience being brought to the user.

In another implementation, the user selects one dynamic authorization code from the dynamic authorization codes saved by the user terminal and inputs the selected dynamic authorization code to a computer, and then the computer forwards the dynamic authorization code to the server, in the case that the third party device is the computer.

The above implementation mainly applied to the payment transaction in the online shopping. The user views the dynamic authorization codes saved by the user terminal and selects one dynamic authorization code from the dynamic authorization codes and inputs the selected dynamic authorization code to a payment page, thus the dynamic authorization code is forwarded.

### A Sixth Embodiment

Reference is made to Figure 6, which is a schematic diagram of a first embodiment of an apparatus for generating a dynamic authorization code according to an embodiment of the invention. The apparatus for generating a dynamic authorization code includes an account creating unit 601, an authorization code generating unit 602 and a sending unit 603.

The account creating unit 601 is configured to create at least one payment card account, where each payment card account is corresponding to information of a payment card.

The authorization code generating unit 602 is configured to generate a dynamic authorization code, establish and save a correspondence between the dynamic authorization code and the payment card account.

The sending unit 603 is configured to send the dynamic authorization code to a user terminal for saving.

### A Seventh Embodiment

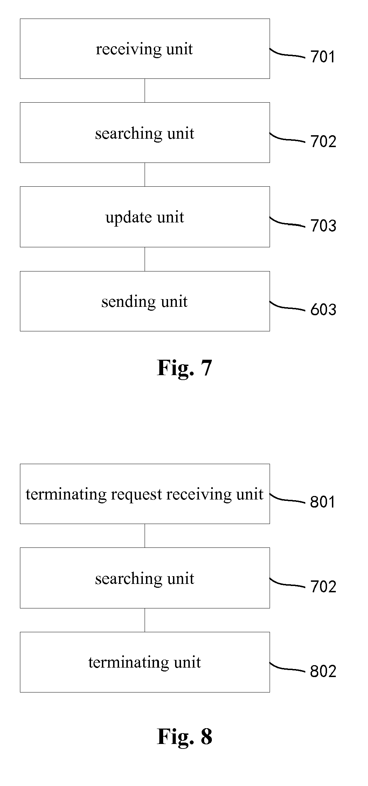

Reference is made to Figure 7, which is a schematic diagram of a second embodiment of an apparatus for generating a dynamic authorization code according to an embodiment of the invention. After the server sends the dynamic authorization code to the user terminal, the dynamic authorization code may be updated based on an update request from the user terminal. The apparatus for generating a dynamic authorization code may further include an update request receiving unit 701, a searching unit 702 and an update unit 703.

The update request receiving unit 701 is configured to receive the update request sent by the user terminal, where the update request includes a to-be-updated dynamic authorization code.

The searching unit 702 is configured to search for the payment card account corresponding to the to-be-updated dynamic authorization code.

The update unit 703 is configured to generate a new dynamic authorization code, establish and save a correspondence between the new dynamic authorization code and the payment card account, and delete the to-be-updated dynamic authorization code.

The sending unit 603 is further configured to send the new dynamic authorization code to the user terminal for saving.

### An Eighth Embodiment

Reference is made to Figure 8, which is a schematic diagram of a third embodiment of an apparatus for generating a dynamic authorization code according to an embodiment of the invention. After the server sends the dynamic authorization code to the user terminal, the dynamic authorization code may be terminated based on a terminating request from the user terminal. The apparatus for generating a dynamic authorization code may further include a terminating request receiving unit 801 and a terminating unit 802.

The terminating request receiving unit 801 is configured to receive the terminating request sent by the user terminal, where the terminating request includes a to-be-terminated dynamic authorization code.

The searching unit 702 is configured to search for the payment card account corresponding to the to-be-terminated dynamic authorization code.

And the terminating unit 802 is configured to delete the correspondence between the to-be-terminated dynamic authorization code and the payment card account.

### A Ninth Embodiment

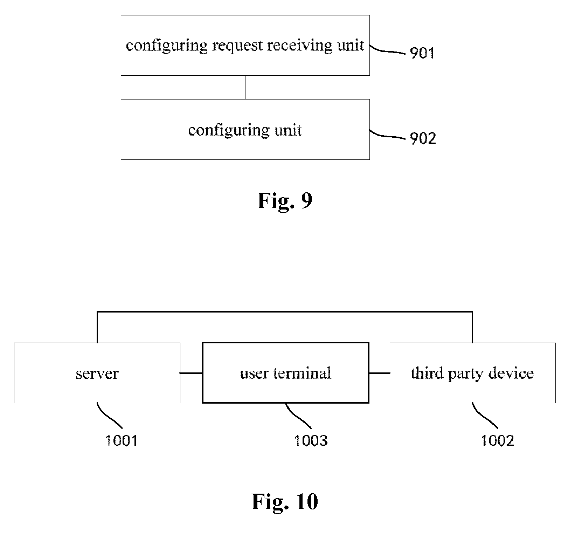

Reference is made to Figure 9, which is a schematic diagram of a fourth embodiment of an apparatus for generating a dynamic authorization code according to an embodiment of the invention. After the server sends the dynamic authorization code to the user terminal, the attribute of the dynamic authorization code may be configured based on a configuring request from the user terminal. The apparatus for generating a dynamic authorization code may further include a configuring request receiving unit 901 and a configuring unit 902.

The configuring request receiving unit 901 is configured to receive the configuring request sent by the user terminal, where the configuring request includes the dynamic authorization code and attribute information of the dynamic authorization code, the attribute information includes one or more of a use time limit, a use password and a use quota.

The configuring unit 902 is configured to search for the dynamic authorization code, establish and save a correspondence between the dynamic authorization code and the attribute information.

### A Tenth Embodiment

Reference is made to Figure 10, which is a schematic diagram of a payment transaction system according to an embodiment of the invention. The payment transaction system includes a server 1001, a user terminal 1002 and a third party device 1003.

The server is configured to generate a dynamic authorization code and send the dynamic authorization code to the user terminal for saving.

The third party device is configured to forward the dynamic authorization code saved by the user terminal to the server.

The server is further configured to search for the payment card account corresponding to the dynamic authorization code, and complete a payment transaction by using the payment card information corresponding to the payment card account.

In particular, the user terminal sends the saved dynamic authorization code to a card reader in a contacted communication manner or a contactless communication manner, and then the card reader forwards the dynamic authorization code to the server, in the case that the third party device is the card reader.

The user inputs the dynamic authorization code saved by the user terminal to a computer after the user obtains the dynamic authorization code, and then the computer forwards the dynamic authorization code to the server, in the case that the third party device is the computer.

According to the above-mentioned description of the embodiments, the skilled in the art may understand clearly that all or part of the steps in the above embodiments of the method may be implemented by using a software in conjunction with a necessary universal hardware platform. Based on this understanding, the essence of the technical solution of the invention, i.e. the part of the technical solution of the invention which contributes to the prior art, may be embodied in a software production. The computer software production may be stored in a storage medium such as a ROM/RAM, a disk or a CD, and includes a number of instructions for making a computer device (which may be a personal computer, a server, or a network device) to perform all or a part of the steps in the embodiments of the method according to the invention.

It should be noted that the embodiments of the present invention are described herein in a progressive manner, for the same or similar parts between the embodiments, one can refer to the other embodiments, with the emphasis of each of the embodiments on the difference between it and the other embodiments. The embodiments of the apparatus and system substantially correspond to the embodiments of the method. Therefore, the corresponding descriptions are relatively simple, and relevant portions may be referred to the description for the portions of the embodiments of the method. The above-described embodiments of the apparatus and system are merely illustrative. A unit described as a separated part may be or may not be physically separated. A part shown in a unit may be or may not be a physical unit, i.e. a part shown in a unit may be located in one place or may be distributed to multiple network units. A part or all of the modules may be chosen as required to achieve the object of the present embodiment plan. The skilled in the art may understand and implement the invention without creative work.

What is described above is only the better embodiments of the present invention and are not intended to define the scope of protection of the present invention. Any changes, equivalent substitution, improvement and so on made within the spirit and principles of the present invention are all contained in the scope of protection of the present invention.

## Claims

1. A method for generating a dynamic authorization code, comprising:
creating at least one payment card account, wherein each payment card account is corresponding to information of a payment card;
generating a dynamic authorization code, establishing and saving a correspondence between the dynamic authorization code and the payment card account; and
sending the dynamic authorization code to a user terminal for saving.

2. The method for generating a dynamic authorization code according to claim 1, further comprising:
receiving an update request sent by the user terminal, wherein the update request comprises a to-be-updated dynamic authorization code;
searching for a payment card account corresponding to the to-be-updated dynamic authorization code;
generating a new dynamic authorization code, establishing and saving a correspondence between the new dynamic authorization code and the payment card account, and deleting the to-be-updated dynamic authorization code; and
sending the new dynamic authorization code to the user terminal for saving.

3. The method for generating a dynamic authorization code according to claim 1, further comprising:
receiving a terminating request sent by the user terminal, wherein the terminating request comprises a to-be-terminated dynamic authorization code;
searching for a payment card account corresponding to the to-be-terminated dynamic authorization code; and
deleting the correspondence between the to-be-terminated dynamic authorization code and the payment card account.

4. The method for generating a dynamic authorization code according to any one of claims 1 to 3, further comprising:
receiving a configuring request sent by the user terminal, wherein the configuring request comprises a dynamic authorization code and attribute information of the dynamic authorization code, and the attribute information comprises one or more of a use time limit, a use password and a use quota; and
searching for the dynamic authorization code, establishing and saving a correspondence between the dynamic authorization code and the attribute information.

5. A payment transaction method, wherein a dynamic authorization code is generated by using the method for generating a dynamic authorization code according to any one of claims 1 to 4, the payment transaction method comprises:
receiving, by a server, the dynamic authorization code saved by the user terminal and forwarded by a third party device;
searching for the payment card account corresponding to the dynamic authorization code; and
completing a payment transaction by using the payment card information corresponding to the payment card account.

6. The payment transaction method according to claim 5, wherein
in the case that the third party device is a card reader, sending, by the user terminal, the saved dynamic authorization code to the card reader in a contacted communication manner or a contactless communication manner, and forwarding, by the card reader, the dynamic authorization code to the server;
or
in the case that the third party device is a computer, inputting, by a user, the dynamic authorization code saved by the user terminal to the computer after the user obtains the dynamic authorization code, and forwarding, by the computer, the dynamic authorization code to the server.

7. An apparatus for generating a dynamic authorization code, comprising:
an account creating unit, configured to create at least one payment card account, wherein each payment card account is corresponding to information of a payment card;
an authorization code generating unit, configured to generate a dynamic authorization code, establish and save a correspondence between the dynamic authorization code and the payment card account; and
a sending unit, configured to send the dynamic authorization code to a user terminal for saving.

8. The apparatus for generating a dynamic authorization code according to claim 7, further comprising:
an update request receiving unit, configured to receive an update request sent by the user terminal, wherein the update request comprises a to-be-updated dynamic authorization code;
a searching unit, configured to search for a payment card account corresponding to the to-be-updated dynamic authorization code; and
an update unit, configured to generate a new dynamic authorization code, establish and save a correspondence between the new dynamic authorization code and the payment card account, and delete the to-be-updated dynamic authorization code;
the sending unit, further configured to send the new dynamic authorization code to the user terminal for saving.

9. The apparatus for generating a dynamic authorization code according to claim 7, further comprising:
a terminating request receiving unit, configured to receive a terminating request sent by the user terminal, wherein the terminating request comprises a to-be-terminated dynamic authorization code;
the searching unit, further configured to search for a payment card account corresponding to the to-be-terminated dynamic authorization code; and
a terminating unit, configured to delete the correspondence between the to-be-terminated dynamic authorization code and the payment card account.

10. The apparatus for generating a dynamic authorization code according to any one of claims 7 to 9, further comprising:
a configuring request receiving unit, configured to receive a configuring request sent by the user terminal, wherein the configuring request comprises a dynamic authorization code and attribute information of the dynamic authorization code, the attribute information comprises one or more of a use time limit, a use password and a use quota; and
a configuring unit, configured to search for the dynamic authorization code, establish and save a correspondence between the dynamic authorization code and the attribute information.

11. A payment transaction system, comprising a server, a user terminal and a third party device, wherein
the server is configured to generate a dynamic authorization code and send the dynamic authorization code to the user terminal for saving;
the third party device is configured to forward the dynamic authorization code saved by the user terminal to the server; and
the server is further configured to search for a payment card account corresponding to the dynamic authorization code, and complete a payment transaction by using payment card information corresponding to the payment card account.

12. The payment transaction system according to claim 11, wherein
in the case that the third party device is a card reader, the user terminal is configured to send a saved dynamic authorization code to the card reader in a contacted communication manner or a contactless communication manner, and the card reader is configured to forward the dynamic authorization code to the server;
or
in the case that the third party device is a computer, a dynamic authorization code saved by the user terminal is input to the computer by a user after the user obtains the dynamic authorization code, and the computer is configured to forward the dynamic authorization code to the server.
